# EUROPEAN PATENT SPECIFICATION

(11) **EP 2 168 856 B1**
(45) Date of publication and mention of the grant of the patent: **18.02.2015**
(21) Application number: 09171014.5
(22) Date of filing: 22.09.2009
(51) Int. Cl.: B62J 17/04, B62J 17/02

(54) **Vehicle front structure**
Vorderteilkonstruktion eines Fahrzeuges
Structure avant de véhicule

(30) Priority: 30.09.2008 JP 2008253899
(43) Date of publication of application: 31.03.2010
(73) Proprietor: Honda Motor Co., Ltd., Tokyo 107-8556 (JP)
(72) Inventor: Takahashi, Daisuke, Saitama 351-0193 (JP); Hashimoto, Yoshiharu, Saitama 351-0193 (JP); Yoshida, Naoki, Saitama 351-0193 (JP); Umikawa, Daisuke, Saitama 351-0193 (JP)
(74) Representative: Ilgart, Jean-Christophe

(56) References cited:
- EP-A2- 1 457 412
- EP-A2- 1 495 954
- JP-A- H10 203 453

## Description

### [Technical Field]

The present invention relates to an improved vehicle front structure having a visor member.

### [Background Art]

A known vehicle front structure includes a visor member (see, for example, Patent Document 1).
[Patent Document 1]
Japanese Patent No. 3504098 (Fig. 6)

Referring to Fig. 6 of Patent Document 1, a windscreen 34 (the same reference numeral as that used in Patent Document 1 will be used; the same also holds true hereunder; hereinafter referred to as a visor member 34) as a windbreak is disposed forwardly of a handlebar cover 33 for covering a handlebar. The visor member 34 is extended obliquely upwardly toward the rear. The visor member 34 includes an air guide port 35a formed at a lower portion thereof. The air guide port 35a introduces an air flow to a backside of the visor member 34.

Unfortunately, however, in the prior art disclosed in Patent Document 1, the air guide port 35a has only a limited size relative to the size of the visor member 34. In addition, in some cases during turning, a smoothing action of the visor member 34 requires an input of extra force to be applied to the handlebar.

### [Disclosure of the Invention]

### [Problem to be Solved by the Invention]

It is therefore an object of the present invention to provide a technique that allows, in a vehicle front structure having a visor member, a sufficient amount of air flow to be introduced to a backside of the visor member and that can improve a vehicle turning performance.

### [Means for Solving the Problem]

To achieve the foregoing object, according to claim 1 of the present invention, there is provided an improvement for a vehicle front structure that includes: a head pipe; a handlebar pipe disposed steerably on the head pipe; a handlebar cover supported on the handlebar pipe, the handlebar cover for covering an outside of the handlebar pipe; and a visor member disposed at an upper portion of the handlebar cover, the visor member for smoothing an air flow. The improvement is characterized in that: the visor member includes left and right side wall portions extended substantially perpendicularly from the handlebar cover; and a front wall portion extending across the left and right side wall portions and spaced away from an upper surface of the handlebar cover; an air guide path that introduces an air flow to a back surface of the visor member is formed between the upper surface of the handlebar cover and the visor member; the air guide path is defined by the upper surface of the handlebar cover, the left and right side wall portions, and the front wall portion; and the left and right side wall portions include side wall step portions formed at trailing ends thereof.

According to claim 2 of the present invention, the handlebar cover includes cutout portions disposed near trailing ends of the side wall portions and a removable lid member disposed at the cutout portions.

According to claim 3 of the present invention, the cutout portions serve also as openings used when the visor member is removed and, instead, a windscreen prepared separately is to be mounted on the handlebar pipe.

### [Effects of the Invention]

The improved vehicle front structure according to claim 1 of the present invention includes the air guide path that is defined by the upper surface of the handlebar cover, the left and right side wall portions, and the front wall portion. Because the visor member includes the left and right side wall portions, the air guide path can have a large cross-sectional area. The larger cross-sectional area of the air guide path allows a sufficient amount of air flow to be flowed to the back surface of the visor member in accordance with the size of the visor member.

In addition, in accordance with the present invention, the left and right side wall portions include the side wall step portions formed at the trailing ends thereof.
The air guide path included in the prior-art visor member was formed to have smooth curved and flat surfaces to achieve greater aerodynamic characteristics. When the vehicle runs in a straight-ahead direction in this case, the air flow that passes through the air guide path smoothly flows rearwardly without generating turbulence. During turning, however, the smooth air flow through the air guide path requires an input of extra force to counteract the smooth air flow.

In this respect, in the present invention, the side wall step portions are formed at the trailing ends of the left and right side wall portions. Accordingly, the air flow inputted through the air guide path is separated and disturbed by the side wall step portions. Specifically, the side wall step portions generate turbulence. Because of the turbulence generated in the air guide path, the vehicle orientation can be changed with an input of an even smaller force as compared with an arrangement of having no side wall step portions. Specifically, the side wall step portions allow the input during turning to be appropriately adjusted, so that improved turning performance can be achieved.

Further in accordance with claim 2 of the present invention, the handlebar cover includes the cutout portions disposed near the trailing ends of the side wall portions and the removable lid member disposed at the cutout portions.
If the lid member is not mounted in the cutout portions, the cutout portions disturb the air flow. Specifically, turbulence can be effectively generated in the air flow passing through the air guide path.

Alternatively, if the lid member is mounted in the cutout portions, turbulence can be effectively generated in the air flow passing through the air guide path by, for example, a step portion that may be formed between the cutout portions and the lid member.

Specifically, because the handlebar cover includes the cutout portions disposed near the trailing ends of the side wall portions, turbulence can be effectively generated in the air flow that passes through the air guide path. The turbulence generated in the air flow passing through the air guide path allows, during turning, the vehicle orientation to be changed with the input of an even smaller force. The input of the force during turning can therefore be appropriately adjusted through a cutout portion or a groove, so that turning performance can be improved even further.

In addition, the cutout portions are disposed on the inside of the side wall portions. The cutout portions and the lid can be made less noticeable, so that there is no likelihood of appearance being degraded.

Further in accordance with claim 3 of the present invention, the cutout portions serve also as openings used for mounting of a windscreen on the handlebar pipe. The windscreen can thereby be mounted easily on the side of the vehicle without separately making holes or performing other operations.

### [Brief Description of the Drawings]

[Fig. 1]

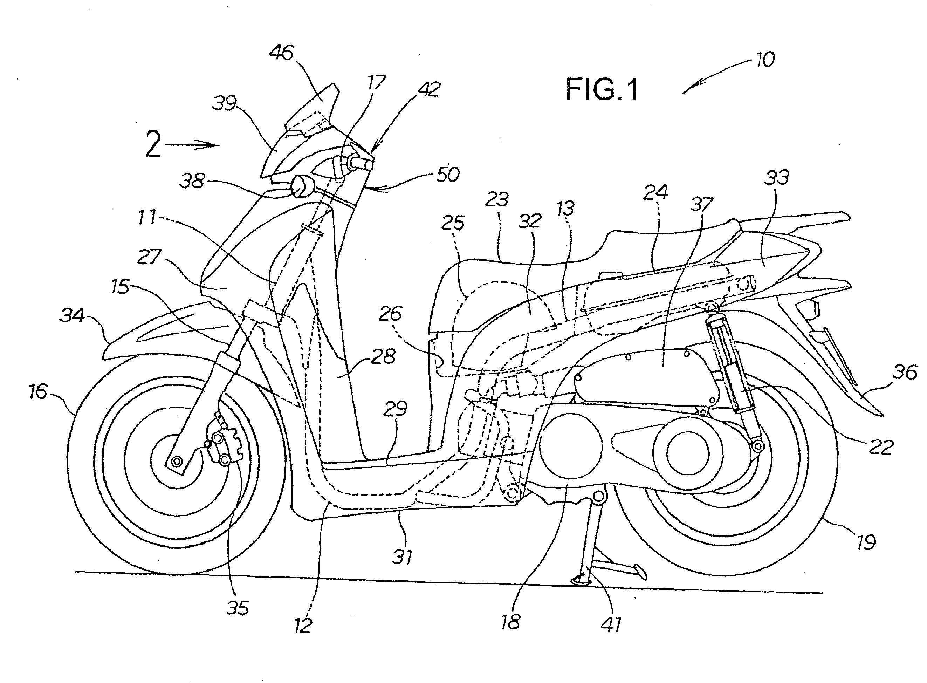

   Fig. 1 is a side elevational view showing a vehicle according to the present invention.
[Fig. 2]

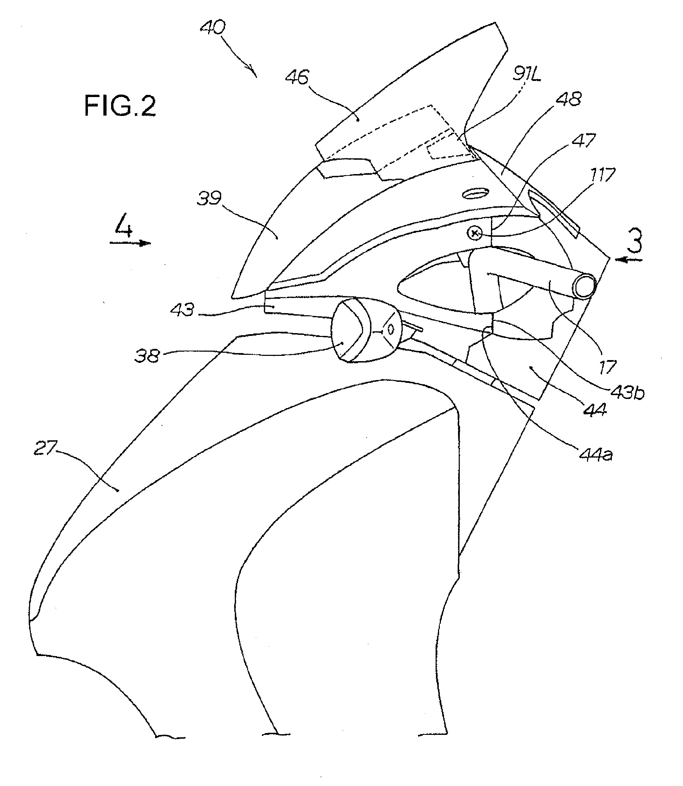

   Fig. 2 is a side elevational view showing a vehicle front portion according to the present invention.
[Fig. 3]

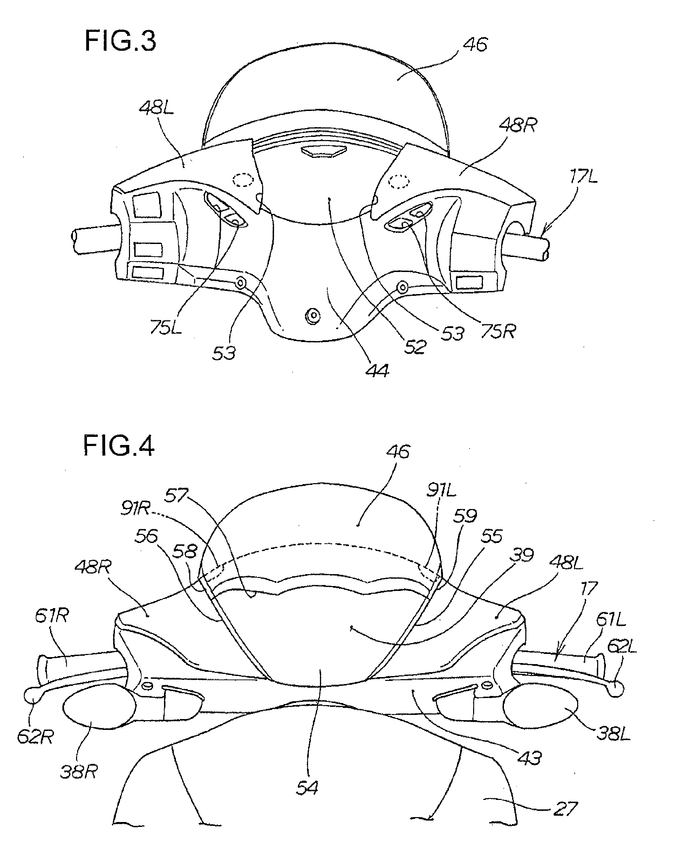

   Fig. 3 is a view on arrow 3 of Fig. 2.
[Fig. 4]
   Fig. 4 is a view on arrow 4 of Fig. 2.
[Fig. 5]

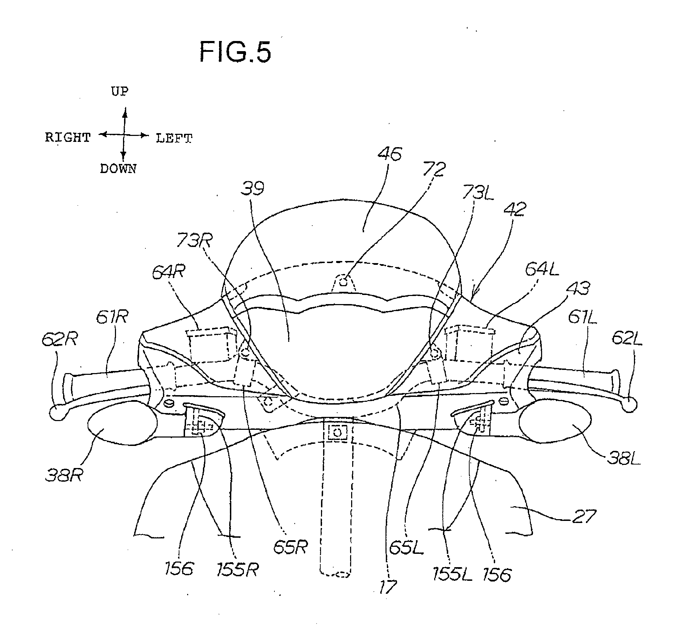

   Fig. 5 is a front view showing the vehicle front portion according to the present invention.
[Fig. 6]

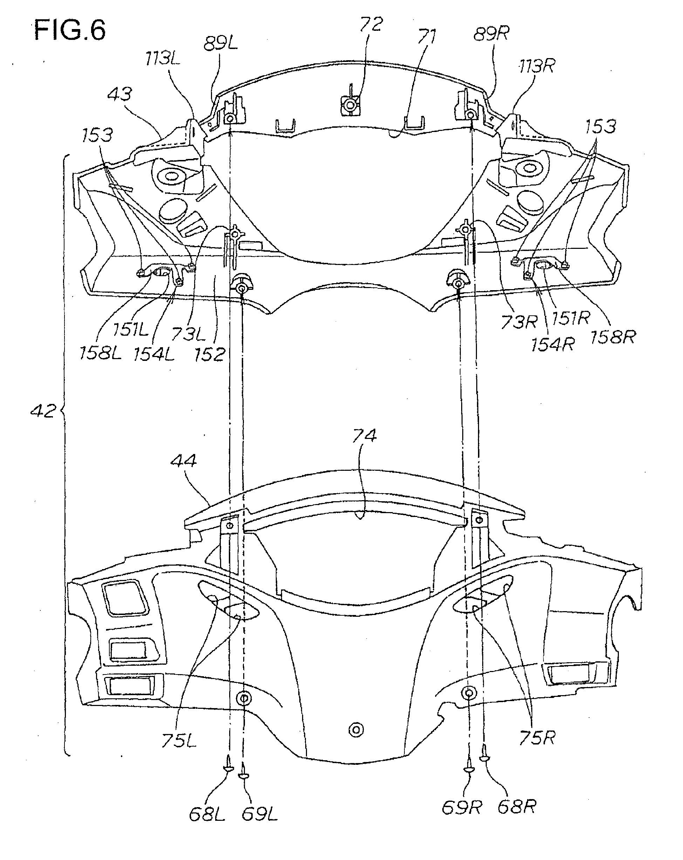

   Fig. 6 is an exploded view showing a handlebar cover according to the present invention.
[Fig. 7]

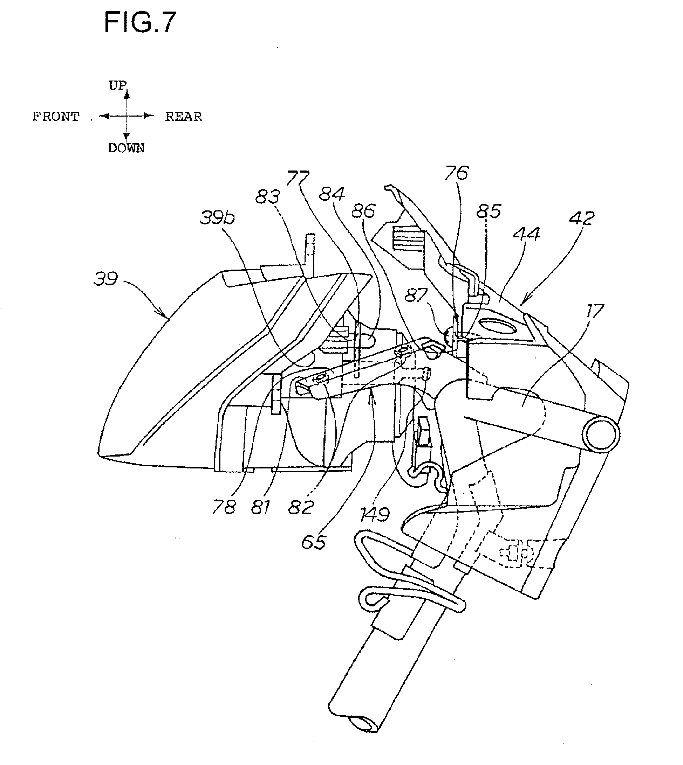

   Fig. 7 is a side elevational view for illustrating that a handlebar cover rear half body and a headlight are supported by a stay member according to the present invention.
[Fig. 8]

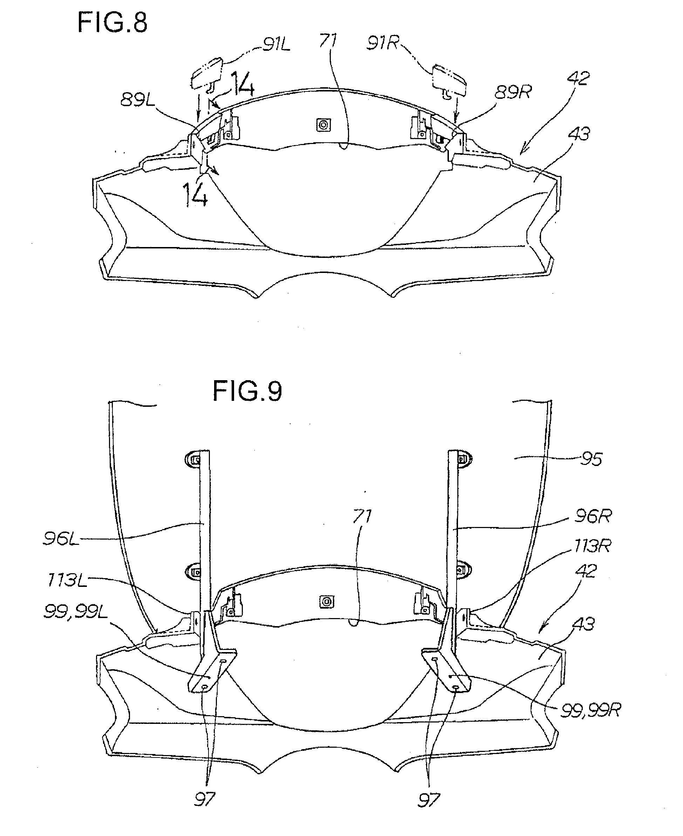

   Fig. 8 is a rear elevational view for illustrating that a lid member can be removed from, or mounted in, a cutout portion formed in a handlebar cover front half body according to the present invention.
[Fig. 9]
   Fig. 9 is a rear elevational view for illustrating that a column of a windscreen can be passed through a cutout portion formed in the handlebar cover front half body according to the present invention.
[Fig. 10]

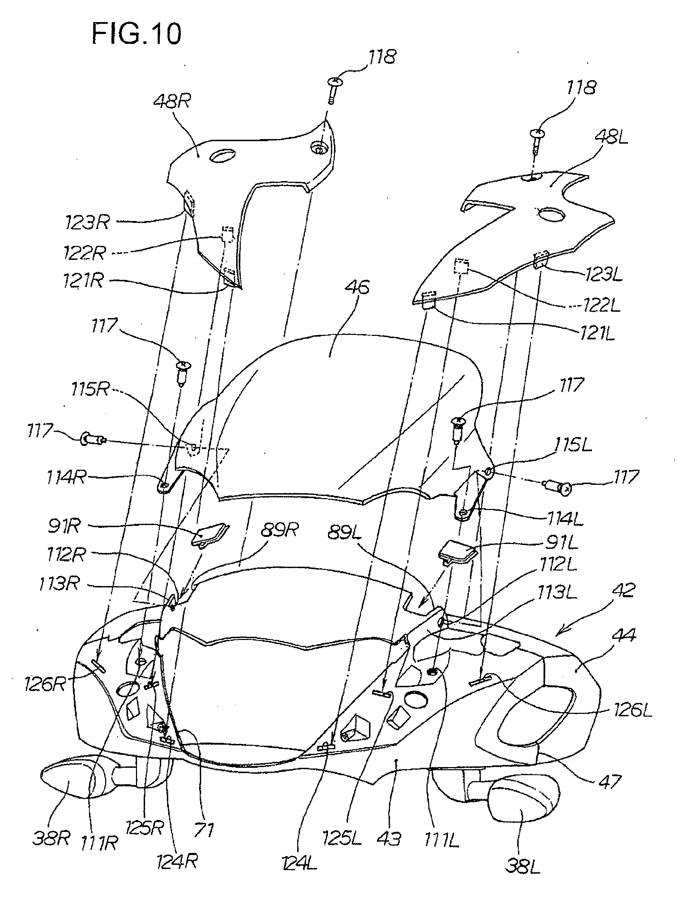

   Fig. 10 is an exploded perspective view showing parts around the handlebar cover according to the present invention.
[Figs. 11(a) and 11(b)]

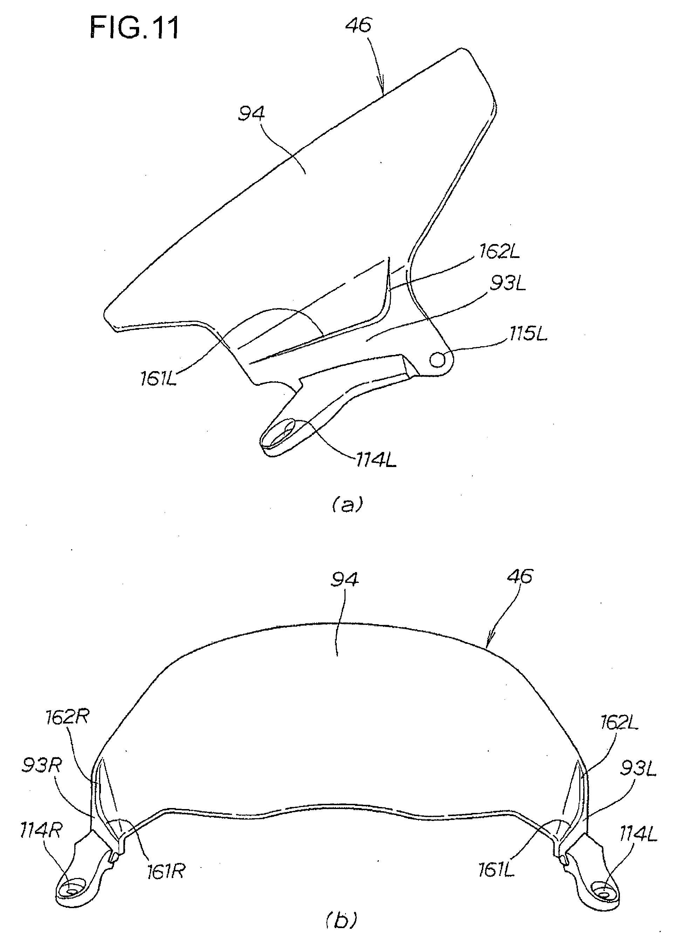

   Figs. 11(a) and 11(b) are illustrations of a visor member according to the present invention.
[Fig. 12]

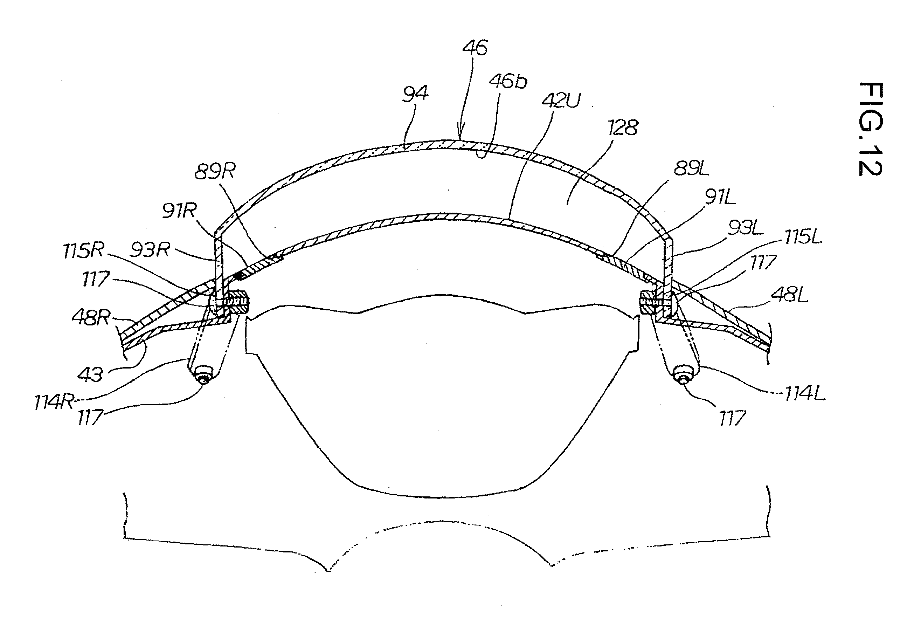

   Fig. 12 is a cross-sectional view for illustrating the position of the visor member relative to the position of the handlebar cover according to the present invention.
[Figs. 13(a) and 13(b)]

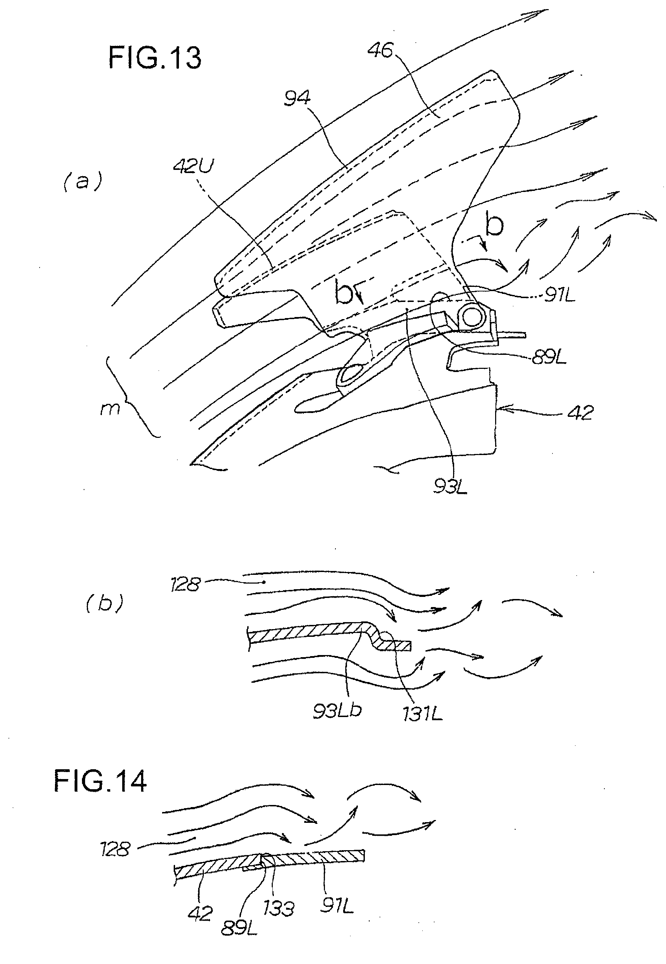

   Figs. 13(a) and 13(b) are illustrations for describing the operation of the visor member mounted on the handlebar cover according to the present invention.
[Fig. 14]
   Fig. 14 is a cross-sectional view taken along line 14-14 of Fig. 8, illustrating the effect.

### [Best Mode for Carrying Out the Invention]

The best mode for carrying out the present invention will be described below with reference to the accompanying drawings. In the drawings, "up," "down," "left," "right," "front," and "rear" indicate directions with reference to a rider, respectively. The drawings should be viewed in the direction of reference numerals.

Fig. 1 is a side elevational view showing a vehicle according to the present invention. A motorcycle 10 as the vehicle is a low-floor type motorcycle. The motorcycle 10 includes a vehicle body frame that is formed by extending from a head pipe 11 a main frame 12 having a U shape in a side view and extending from the main frame 12 a seat rail 13. The motorcycle 10 further includes a front fork 15, a handlebar pipe 17, a power unit 18, a rear cushion 22, a tandem seat 23, a fuel tank 24, and a storage box 26. Specifically, the front fork 15 is steerably attached to the head pipe 11. A front wheel 16 is mounted on the front fork 15. The handlebar pipe 17 is attached steerably to the head pipe 11 disposed at an upper end of the front fork 15. The power unit 18 is vertically swingably mounted at a rear portion of the main frame 12. A rear wheel 19 is mounted on the power unit 18. The rear cushion 22 is inserted between the power unit 18 and the seat rail 13. The tandem seat 23 is placed on the seat rail 13. The fuel tank 24 is disposed below the tandem seat 23. The storage box 26 that can accommodate therein a helmet 25 is also disposed below the tandem seat 23. In addition, the handlebar pipe 17 is covered in a handlebar cover 42 that rotates integrally with the handlebar pipe 17. The head pipe 11 and part of the main frame 12 are covered in a front cover 27 and a leg shield 28. The remainder of the main frame 12 is covered in a step 29 and an undercover 31. The seat rail 13 is covered in a side cover 32 and a rear cover 33.
In Fig. 1, reference numeral 34 denotes a front fender, reference numeral 35 denotes a brake caliper, reference numeral 36 denotes a rear fender, reference numeral 37 denotes an air cleaner, and reference numeral 38 denotes a direction indicator.

Fig. 2 is a side elevational view showing a vehicle front portion according to the present invention. A vehicle front portion 40 includes the front cover 27, a handlebar cover front half body 43, a handlebar cover rear half body 44, the direction indicator 38, a headlight 39, a visor member 46, and a garnish member 48. Specifically, the handlebar cover front half body 43 covers forwardly of the handlebar pipe 17 which is disposed upwardly of the front cover 27 and steered by a rider and rotates integrally with the handlebar pipe 17. The handlebar cover rear half body 44 abuts on the handlebar cover front half body 43 from the rear to cover rearwardly of the handlebar pipe 17 and rotates integrally with the handlebar pipe 17. The direction indicator 38 and the headlight 39 are disposed on the handlebar cover front half body 43. The visor member 46 is disposed at a front upper portion of the handlebar cover front half body 43 and shields direct sunlight. The garnish member 48 covers from above a faying portion 47 formed when a rear end face 43b of the handlebar cover front half body 43 is brought into abutment with a front end face 44a of the handlebar cover rear half body 44.

The garnish member 48 has a rear portion 49 extended up to a side of the handlebar cover rear half body 44. Specifically, the garnish member 48 covers forwardly of the faying portion 47.
The visor member 46 disposed upwardly of the handlebar cover front half body 43 functions also to smooth an air flow. The visor member 46 will be described in detail later.

Fig. 3 is a view on arrow 3 of Fig. 2. A meter unit 52 including a speedometer and an odometer is mounted in the handlebar cover rear half body 44. Garnish members 48L, 48R are continuously disposed along side surfaces 53, 53 of the meter unit 52.
The garnish members 48L, 48R that follow along the side surfaces 53 of the meter unit 52 in addition to the handlebar cover rear half body 44 helps improve appearance of the parts around the meter unit 52.

Fig. 4 is a view on arrow 4 of Fig. 2. A lens 54 of the headlight 39 is disposed in the handlebar cover front half body 43. The lens 54 is disposed downwardly of the visor member 46. An outline 57 of the visor member 46 is disposed along left and right outline portions 55, 56 of the lens 54 and such that the lens 54 and the visor member 46 are continuous with each other. The garnish members 48L, 48R are disposed so as to follow along the outline portions 55, 56 as end portions of the lens 54.

Outlines 57 to 59 of the visor member 46 are disposed such that the lens 54 and the visor member 46 are continuous with each other along the outline portions 55, 56 of the lens 54 of the headlight 39. Lines from the outline portions 55, 56 of the lens 54 can therefore be continuous with the visor member 46.

The outlines 57 to 59 of the visor member 46, and the garnish members 48L, 48R, are disposed along the outline portions 55, 56 of the lens 54. This gives the vehicle front portion an even more characteristic appearance.

Mounting structures for members mounted on the handlebar pipe 17 and for the handlebar cover 42, the headlight 39, and other members mounted on stay members disposed on the handlebar pipe 17 will be described below with reference to Figs. 5 through 7.

Fig. 5 is a front view showing the vehicle front portion according to the present invention. Fig. 5 shows that direction indicators 38L, 38R (L and R are suffixes representing left and right, respectively; the same applies hereunder) and the headlight 39 are mounted on the handlebar cover front half body 43; a left grip 61L, a left brake lever 62L, a left hydraulic master cylinder 64L, and a left stay member 65L are mounted on the left-hand side of the handlebar pipe 17; and a right grip 61R, a right brake lever 62R, a right hydraulic master cylinder 64R, and a right stay member 65R are mounted on the right-hand side of the handlebar pipe 17.

The left and right stay members 65L, 65R mounted on the handlebar pipe 17 are mounted with the handlebar cover 42 and support the headlight 39. The left and right stay members 65L, 65R will be described in detail later.
In accordance with the present invention, each of the left and right hydraulic master cylinders 64L, 64R is used for the brake. Either one of the left and right hydraulic master cylinders 64L, 64R may nonetheless be used for the clutch.

Fig. 6 is an exploded view showing the handlebar cover 42 according to the present invention. For ease of removal/reinstallation from/to the handlebar pipe 17, the handlebar cover 42 includes the handlebar cover front half body 43, the handlebar cover rear half body 44, and screws 68L, 69L, 68R, 69R that fasten the handlebar cover front and rear half bodies 43, 44.

The handlebar cover front half body 43 includes a headlight opening 71 formed at a center thereof. The handlebar cover front half body 43 further includes three screw-in seats 72, 73L, 73R with which the headlight 39 is mounted. The screw-in seats 72, 73L, 73R are disposed upwardly and downwardly of the headlight opening 71.

The handlebar cover rear half body 44 includes a meter opening 74 in which the meter unit 52 is fitted. The handlebar cover rear half body 44 further includes left and right openings 75L, 75R of the left and right hydraulic master cylinders 64L, 64R at a lower portion on the left and right of the meter opening 74. The left and right openings 75L, 75R serve as inspection holes for checking the oil level of a reservoir tank. The left and right openings 75L, 75R serve also as aiming adjustment holes, through which a tool is inserted to access a left or right aiming adjustment screw (reference numeral 149 of Fig. 7) for the headlight 39.
The meter unit 52 is disposed inside the handlebar cover 42.

A mounting structure for the direction indicators 38L, 38R will be described below with reference to Figs. 5 and 6.
A bottom portion 152 that is disposed at a lower portion of the handlebar cover front half body 43 and connects to the faying portion 47 with the handlebar cover rear half body 44 includes direction indicator mounting holes 151L, 151R. Left and right flasher brackets 154L, 154R having fastening members 153.. (.. indicates plurality) are screwed and fastened from below of the bottom portion 152 on the inside thereof. The left and right direction indicators 38L, 38R are mounted via nuts 156, 156 to extension flaps 155L, 155R extended downwardly from the flasher brackets 154L, 154R, respectively.

The flasher brackets 154L, 154R include seat portions 158L, 158R and the extension flaps 155L, 155R. The seat portions 158L, 158R are mounted inwardly of the bottom portion 152. The extension flaps 155L, 155R are substantially at right angles to the seat portions 158L, 158R and extend downwardly through the direction indicator mounting holes 151L, 151R. The direction indicators 38L, 38R are attached to the extension flaps 155L, 155R.

In accordance with the above-described mounting structure for the direction indicators 38L, 38R, the flasher brackets 154L, 154R are disposed on the inside of the handlebar cover front half body 43. There is therefore no likelihood of vehicle appearance being degraded. In addition, the flasher brackets 154L, 154R are attached to the handlebar cover front half body 43 in advance so that the extension flaps 155L, 155R extend downwardly from the direction indicator mounting holes 151L, 151R, to thereby allow the direction indicators 38L, 38R to be mounted on the extension flaps 155L, 155R. Good workability can therefore be achieved for mounting of the direction indicators 38L, 38R.

Fig. 7 is a side elevational view for illustrating that the handlebar cover rear half body 44 and the headlight 39 are supported by the stay members 65.
The stay member 65 having a handlebar cover support portion 76 and a headlight support portion 77 is mounted on the handlebar pipe 17 and the handlebar cover rear half body 44 that forms part of the handlebar cover 42 is mounted on the stay member 65.

In addition, a bracket holding portion 78 that allows a screen bracket (reference numeral 99 in Fig. 9) that supports a screen to be described later to be mounted is disposed on the stay member 65. The bracket holding portion 78 includes a seat portion 81 and weld nuts 82, 82. The seat portion 81 receives the screen bracket 99. The weld nuts 82, 82 are disposed on the seat portion 81. Fastening members not shown inserted from the side of the screen bracket 99 are screwed into the weld nuts 82, 82.

The headlight support portion 77 includes a support hole 83 formed therein. A protrusion 84 extended rearwardly from a rear surface 39b of the headlight 39 is engaged in the support hole 83. The headlight 39 is thereby supported on the stay member 65.

The handlebar cover support portion 76 includes a drilled hole 85 formed therein. A mounting seat 86 is formed on a front surface of the handlebar cover rear half body 44 in alignment with the drilled hole 85. A setscrew 87 is then screwed into the handlebar cover rear half body 44 from the forward, so that the handlebar cover rear half body 44 is secured to the stay member 65.

Assembly sequence of parts around the handlebar pipe 17 is as follows. Specifically, the headlight 39 is mounted first and the left and right direction indicators (reference numerals 38L, 38R of Fig. 5) are next mounted on the handlebar cover front half body (reference numeral 43 of Fig. 2). Then, the meter unit (reference numeral 52 of Fig. 3) is mounted on the handlebar cover rear half body 44, the handlebar cover rear half body 44 is mounted on the handlebar cover support portion 76, and the handlebar cover front half body 43 is finally mounted on the handlebar cover rear half body 44.

Fig. 8 is a rear elevational view for illustrating that a lid member can be removed from, or mounted in, a cutout portion formed in the handlebar cover front half body 43 according to the present invention. Fig. 8 shows that lid members 91L, 91R are removably disposed at cutout portions 89L, 89R formed at the left and right ends at an upper end of the handlebar cover front half body 43.

Fig. 9 is a rear elevational view for illustrating that a column of a windscreen can be passed through a cutout portion formed in the handlebar cover front half body 43 according to the present invention.
The handlebar cover front half body 43 that forms part of the handlebar cover 42 includes the cutout portions 89L, 89R. The cutout portions 89L, 89R serve as openings used when the visor member 46 is removed and, instead, a windscreen 95 prepared separately is to be mounted on the handlebar pipe (reference numeral 17 of Fig. 5). Windscreen columns 96L, 96R are disposed in the cutout portions 89L, 89R, respectively, and the windscreen 95 is mounted on the windscreen columns 96L, 96R. Screen brackets 99L, 99R are fitted on lower ends of the windscreen columns 96L, 96R. The screen brackets 99L, 99R include holes 97 .. (.. indicates plurality; the same applies also hereunder) used for fixing to the weld nuts 82 .. disposed on the stay member 65.

Referring also to Fig. 8, the cutout portions 89L, 89R are adapted to serve also as the openings for mounting the handlebar pipe 17. This arrangement allows the windscreen 95 to be mounted on the vehicle body side easily without involving degraded vehicle appearance through the following procedure: specifically, the lid members 91L, 91R are removed, the windscreen columns 96L, 96R are passed into the cutout portions 89L, 89R, and then the windscreen 95 is fitted to the windscreen columns 96L, 96R.

Fig. 10 is an exploded perspective view showing parts around the handlebar cover 42 according to the present invention. Fig. 10 illustrates that the visor member 46 and the garnish members 48L, 48R are mounted on the handlebar cover 42.

First visor fastening portions 111L, 111R, to which the visor member 46 is fastened, are disposed on an upper surface of the handlebar cover front half body 43. Vertical wall portions 113L, 113R are formed rearwardly of the first visor fastening portions 111L, 111R. Second visor fastening portions 112L, 112R are disposed on the vertical wall portions 113L, 113R.

First and second visor mounting portions 114L, 114R, 115L, 115R, with which the visor member 46 is mounted on the first and second visor fastening portions 111L, 111R, 112L, 112R disposed on the handlebar cover front half body 43, are disposed on left and right ends, respectively, of the visor member 46.

The garnish members 48L, 48R are mounted on the handlebar cover front half body 43 so as to cover the first and second visor mounting portions 114L, 114R, 115L, 115R disposed on the visor member 46.

Referring to Fig. 10, reference numerals 117 .. denote first fastening screws for attaching the visor member 46 to the handlebar cover front half body 43; reference numerals 121L to 123L and 121R to 123R denote first to third garnish engagement portions formed into tab-like shapes that extend from lower surfaces of the garnish members 48L, 48R, the first to third garnish engagement portions for positioning the garnish members 48L, 48R relative to the handlebar cover front half body 43; reference numerals 124L to 126L and 124R to 126R denote first to third garnish engagement holes which are drilled in the handlebar cover front half body 43 and in which the first to third garnish engagement portions are inserted; and reference numerals 118, 118 denote second fastening screws for attaching the garnish members 48L, 48R to the handlebar cover rear half body 44. The left and right direction indicators 38L, 38R are mounted on the handlebar cover front half body 43.

Figs. 11(a) and 11(b) are illustrations of the visor member 46 according to the present invention. Fig. 11(a) is an illustration of the visor member 46 as viewed from a side and Fig. 11(b) is an illustration of the visor member 46 as viewed from an obliquely downward direction.
The visor member 46 includes the first visor mounting portions 114L, 114R, left and right side wall portions 93L, 93R, the second visor mounting portions 115L, 115R, and a front wall portion 94. Specifically, the first visor mounting portions 114L, 114R are disposed on the left and right sides of the visor member 46. The left and right side wall portions 93L, 93R are extended substantially at right angles from the first visor mounting portions 114L, 114R. The second visor mounting portions 115L, 115R are disposed on the left and right side wall portions 93L, 93R, respectively. The front wall portion 94 extends across the left and right side wall portions 93L, 93R.

Referring to Fig. 11, reference numerals 161L, 161R denote longitudinal direction step portions and reference numerals 162L, 162R denote vertical direction step portions. The longitudinal direction step portions 161L, 161R and the vertical direction step portions 162L, 162R are connected to each other to form an L shape in a side view.

Fig. 12 is a cross-sectional view for illustrating the position of the visor member 46 relative to the position of the handlebar cover 42. In Fig. 12, the visor member 46 is viewed from an obliquely downward direction.
The visor member 46 includes the left and right side wall portions 93L, 93R and the front wall portion 94 that extends across the left and right side wall portions 93L, 93R and is spaced away from an upper surface 42U of the handlebar cover 42. An air guide path 128 that introduces an air flow to a back surface 46b of the visor member 46 is formed between the upper surface 42U of the handlebar cover 42 and the visor member 46. The air guide path 128 is formed by being surrounded by the upper surface 42U of the handlebar cover 42, the left and right side wall portions 93L, 93R, and the front wall portion 94.
Note that the cutout portions 89L, 89R are disposed near trailing ends of the left and right side wall portions 93L, 93R that form part of the visor member 46.

Figs. 13(a) and 13(b) are illustrations for describing the structure and operation of the visor member 46 mounted on the handlebar cover 42 according to the present invention.
Fig. 13(a) shows the following conditions. Specifically, the handlebar cover 42 includes the cutout portions 89L, 89R (only reference numeral 89L representing the cutout portion on the proximal side is shown) disposed near the trailing ends of the left and right side wall portions 93L, 93R (only reference numeral 93L representing the side wall portion on the proximal side is shown) that form part of the visor member 46. The removable lid members 91L, 91R (only reference numeral 91L representing the lid member on the proximal side is shown) are disposed at the cutout portions 89L, 89R. Further, air flows flowing in a direction of an arrow m through the air guide path 128 that introduces the air flow to the back surface (reference numeral 46b in Fig. 11) of the visor member 46 are shown.

Fig. 13(b) is a cross-sectional view taken along line b-b of Fig. 13(a), showing a side wall step portion 131L formed at a trailing end 93Lb of the side wall portion 93L. The side wall step portion 131L is formed outwardly of the vehicle. A side wall step portion on the right side has the same structure as the side wall step portion 131L and will not be described.
The air flow inputted through the air guide path 128 is separated and disturbed by the side wall step portion 131L. Specifically, turbulence is generated at the side wall step portion 131L. The turbulence of air flow through the air guide path 128 allows the direction of the vehicle to be changed with an even smaller input of the handlebar operation than in an arrangement having no side wall step portion 131L. Specifically, the side wall step portion 131L allows the input during the handlebar operation to be appropriately adjusted.
The same effect as that of the side wall step portion 131L can be achieved from the side wall step portion 131R disposed on the side opposite the side wall step portion 131L and will not be reiterated.

Fig. 14 is a cross-sectional view taken along line 14-14 of Fig. 8, illustrating the effect which will be described below with reference also to Fig. 13(a).
The cutout portion 89L is disposed near the trailing end of the side wall portion 93L. The removable lid member 91L is disposed at the cutout portion 89L.
When the lid member 91L is mounted at the cutout portion 89L, a step portion 133 formed between the cutout portion 89L and the lid member 91L, together with the side wall step portion 131L, can generate turbulence even more effectively in the air flow passing through the air guide path 128.

Even if the lid member 91L is not mounted at the cutout portion 89L, the cutout portion 89L can generate turbulence even more effectively in the air flow passing through the air guide path 128.
The arrangement and effect of the side wall step portion 131R are the same as those of the side wall step portion 131L and will not be reiterated.

Referring also to Fig. 12, the air guide path 128 is formed by the upper surface 42U of the handlebar cover 42, the left and right side wall portions 93L, 93R, and the front wall portion 94. Since the visor member 46 includes the left and right side wall portions 93L, 93R, the front wall portion 94 can be spaced any given distance away from the upper surface 42U of the handlebar cover 42, so that the air guide path 128 can have a large cross-sectional area. The larger cross-sectional area of the air guide path 128 allows a sufficient amount of air flow to be flowed to the back surface 46b of the visor member 46 in accordance with the size of the visor member 46.

The air guide path included in the prior-art visor member was formed to have smooth curved and flat surfaces to achieve greater aerodynamic characteristics. When the vehicle runs in a straight-ahead direction in this case, the air flow that passes through the air guide path smoothly flows rearwardly without generating turbulence. During steering operation of the handlebar, however, the smooth air flow through the air guide path causes the rider to tend to feel harder steering.

In this respect, in the present invention, the side wall step portions 131L, 131R are formed at the trailing ends of the left and right side wall portions 93L, 93R, the cutout portions 89L, 89R are disposed in the handlebar cover front half body 43 and near the trailing ends of the left and right side wall portions 93L, 93R, and the lid members 91L, 91R are disposed at the cutout portions 89L, 89R. Accordingly, the air flow inputted through the air guide path 128 is separated and disturbed by the side wall step portions 131L, 131R and the step portion 133 formed between the lid members 91L, 91R and the handlebar cover front half body 43. Specifically, the side wall step portions 131L, 131R and the step portions 133, 133 generate turbulence.

The turbulence flowing through the air guide path 128 allows the steering operation to be performed with an even smaller effort as compared with the arrangement having no side wall step portions 131L, 131R and the step portions 133, 133. Specifically, the side wall step portions 131L, 131R and the step portions 133, 133 allow the input of steering effort to be appropriately adjusted.

If the lid members 91L, 91R are not mounted at the cutout portions 89L, 89R, the cutout portions 89L, 89R can generate even more effectively turbulence in the air flow passing through the air guide path 128.

If the lid members 91L, 91R are mounted at the cutout portions 89L, 89R, on the other hand, turbulence can be generated effectively in the air flow passing through the air guide path 128 as described above. The input of an even smaller effort is then required during steering operation. Specifically, the input of the steering effort can be appropriately adjusted using the cutout portions 89L, 89R, the step portions 133, 133, and the like.
In addition, referring to Fig. 11, the longitudinal direction step portions 161L, 161R and the vertical direction step portions 162L, 162R disposed on the outside of the visor member 46 can also generate turbulence in the air flow. Through the operation of the longitudinal direction step portions 161L, 161R and the vertical direction step portions 162L, 162R, the input of the steering effort can also be appropriately adjusted.

In addition, the cutout portions 89L, 89R are disposed on the inside of the side wall portions 93L, 93R. This arrangement helps make the cutout portions 89L, 89R and the lid less noticeable, so that vehicle appearance can be prevented from being degraded.

Referring also to Fig. 10, the garnish members 48L, 48R are mounted on the handlebar cover front half body 43 so as to cover the first visor mounting portions 114L, 114R and the second visor mounting portions 115L, 115R as the visor mounting portions.

In addition, the rear portion 49 of the garnish member 48 extends up to the side of the handlebar cover rear half body 44, so that the faying portion 47 as the portion of abutment between the handlebar cover front half body 43 and the handlebar cover rear half body 44 is covered in the garnish members 48L, 48R. The arrangement of covering the faying portion 47 in the garnish members 48L, 48R helps enhance appearance of the handlebar cover 42.

Further, the first visor mounting portions 114L, 114R and the second visor mounting portions 115L, 115R as the visor mounting portion and the faying portion 47 are covered in the garnish members 48L, 48R. Dimensional tolerances can therefore be less stringently established for the visor mounting portion, the first visor fastening portions 111L, 111R and the second visor fastening portions 112L, 112R, and for the faying portion 47 between the handlebar cover front half body 43 and the handlebar cover rear half body 44. The less stringent dimensional tolerances in each member help suppress an increase in cost.

The present invention has been described with particularity relative to the detailed description of the exemplary preferred embodiment, in which the present invention is applied to a motorcycle. The present invention can nonetheless be applied to a three-wheeled vehicle or a common saddle-riding type vehicle.

### [Industrial Applicability]

The present invention is well adaptable in a motorcycle having a visor member.

### [Description of Reference Symbols]

10: Motorcycle (vehicle)
11: Head pipe
17: Handlebar pipe
42: Handlebar cover
42U: Upper surface of handlebar cover
46: Visor member
46b: Back surface of visor member
48L, 48R: Garnish member
52: Meter unit
53: Side surface of meter unit
54: Lens of headlight
55: Left outline portion of lens
56: Right outline portion of lens
57: Outline of visor member (upper)
58: Outline of visor member (left)
59: Outline of visor member (right)
89L: Left cutout portion (opening)
89R: Right cutout portion (opening)
91L: Left lid member
91R: Right lid member
93L: Left side wall portion of visor member
93R: Right side wall portion of visor member
94: Front wall portion of visor member
95: Windscreen
114L, 114R: First visor mounting portion (visor mounting portion)
115L, 115R: Second visor mounting portion (visor mounting portion)
128: Air guide path
131L: Left side wall step portion
131R: Right side wall step portion

## Claims

1. A vehicle front structure, including:
a head pipe (11);
a handlebar pipe (17) disposed steerably on the head pipe;
a handlebar cover (42) supported on the handlebar pipe, the handlebar cover for covering an outside of the handlebar pipe; and
a visor member (46) disposed at an upper portion of the handlebar cover, the visor member for smoothing an air flow, **characterized in that**:
the visor member (46) includes
left and right side wall portions (93L, 93R) extended substantially perpendicularly from the handlebar cover and
a front wall portion (94) extending across the left and right side wall portions and spaced away from an upper surface (42U) of the handlebar cover (42);
an air guide path (128) that introduces an air flow to a back surface (46b) of the visor member (46) is formed between the upper surface of the handlebar cover and the visor member;
the air guide path (128) is defined by the upper surface (42U) of the handlebar cover, the left and right side wall portions (93L, 93R), and the front wall portion (94); and
the left and right side wall portions include side wall step portions (131L, 131R) formed at trailing ends thereof.

2. The vehicle front structure according to claim 1, wherein:
the handlebar cover includes cutout portions (89L, 89R) disposed near trailing ends of the side wall portions (93L, 93R) and a removable lid member disposed at the cutout portions.

3. The vehicle front structure according to claim 2, wherein:
the cutout portions (89L, 89R) serve also as openings used when the visor member (46) is removed and, instead, a windscreen prepared separately is to be mounted on the handlebar pipe.

## Patentansprüche

1. Eine Fahrzeugfront-Struktur, umfassend:
ein Kopfrohr (11);
ein steuerbar auf dem Kopfrohr angeordnetes Lenkerrohr (17);
eine Lenkerabdeckung (42), die auf dem Lenkerrohr abgestützt ist, wobei die Lenkerabdeckung dazu dient, eine Außenseite des Lenkerrohrs abzudecken; und
ein Schirm-Element (46), das an einem oberen Teil der Lenkerabdeckung angeordnet ist, wobei das Schirm-Element dazu dient, einen Luftstrom zu glätten, **dadurch gekennzeichnet dass**:
das Schirm-Element (46) umfasst:
sich im Wesentlichen senkrecht von der Lenkerabdeckung erstreckende linke und rechte Seitenwandbereiche (93L, 93R) und
einen sich über die linken und rechten Seitenwandbereiche erstreckenden und von einer oberen Fläche (42U) der Lenkerabdeckung (42) beabstandeten Vorderwandbereich (94);
wobei ein Luftführungskanal (128), der einen Luftstrom zu einer hinteren Fläche (46b) des Schirm-Elements (46) zuführt, zwischen der oberen Fläche der Lenkerabdeckung und dem Schirm-Element gebildet ist;
wobei der Luftführungskanal (128) durch die obere Fläche (42U) der Lenkerabdeckung, die linken und rechten Seitenwandbereiche (93L, 93R) und den Vorderwandbereich (94) definiert ist; und
wobei die linken und rechten Seitenwandbereiche Seitenwand-Stufenbereiche (131L, 131R) umfassen, die nahe deren hinterer Enden ausgeprägt sind.

2. Die Fahrzeugfront-Struktur nach Anspruch 1, wobei:
die Lenkerabdeckung Ausschnitt-Bereiche (89L, 89R), die an den hinteren Enden der Seitenwandbereiche (93L, 93R) angeordnet sind, und ein entfernbares Deckel-Element, das an den Ausschnitt-Bereichen angeordnet ist, umfasst.

3. Die Fahrzeugfront-Struktur nach Anspruch 2, wobei:
die Ausschnitt-Bereiche (89L, 89R) auch als Öffnungen dienen, die benutzt werden, wenn das Schirm-Element (46) entfernt ist und anstelle dessen eine separat vorbereitete Windschutzscheibe am Lenkerrohr anzubringen ist.

## Revendications

1. Structure avant de véhicule, incluant :
un tube de direction (11) ;
un tube de guidon (17) disposé de façon dirigeable sur le tube de direction ;
un couvre-guidon (42) supporté sur le tube de direction, le couvre-guidon étant destiné à couvrir un extérieur du tube de direction ; et
un organe de visière (46) disposé au niveau d'une portion supérieure du couvre-guidon, l'organe de visière étant destiné à ajuster un flux d'air, **caractérisée en ce que** :
l'organe de visière (46) inclut
des portions de paroi latérale gauche et droite (93L, 93R) s'étendant de manière sensiblement perpendiculaire à partir du couvre-guidon et
une portion de paroi avant (94) s'étendant à travers les portions de paroi latérale gauche et droite et espacée d'une surface supérieure (42U) du couvre-guidon (42) ;
un chemin de guidage d'air (128) qui introduit un flux d'air vers une surface arrière (46b) de l'organe de visière (46) est formé entre la surface supérieure du couvre-guidon et l'organe de visière ;
le chemin de guidage d'air (128) est défini par la surface supérieure (42U) du couvre-guidon, les portions de paroi latérale gauche et droite (93L, 93R), et la portion de paroi avant (94) ; et
les portions de paroi latérale gauche et droite incluent des portions étagées de paroi latérale (131L, 131R) formées au niveau d'extrémités arrière de celles-ci.

2. Structure avant de véhicule selon la revendication 1, dans laquelle :
le couvre-guidon inclut des portions découpées (89L, 89R) disposées à proximité d'extrémités arrière des portions de paroi latérale (93L, 93R) et un organe de couvercle amovible disposé au niveau des portions découpées.

3. Structure avant de véhicule selon la revendication 2, dans laquelle :
les portions découpées (89L, 89R) servent également d'ouvertures utilisées lorsque l'organe de visière (46) est enlevé et, qu'à la place, un pare-brise préparé séparément doit être monté sur le tube de guidon.
